# EUROPÄISCHE PATENTANMELDUNG

(11) **EP 1 645 464 A2**
(43) Veröffentlichungstag der Anmeldung: **12.04.2006**
(21) Anmeldenummer: 05015041.6
(22) Anmeldetag: 12.07.2005
(51) Int. Cl.: B60P 3/34, B62D 33/077

(54) **Technik zum Reduzieren von Verdrehungen**

(30) Priorität: 16.07.2004 DE 102004034033
(71) Anmelder: Lüdke, Peter, 47249 Duisburg (DE)
(72) Erfinder: Lüdke, Peter, 47249 Duisburg (DE)

(57) **Zusammenfassung**

Die Erfindung betrifft eine sehr vorteilhafte Verbindung, zwischen einem Aufbau (1) und einer tragenden Einheit (3), welche Beanspruchungen durch Verdrehungskräfte absorbiert und Schwingungen minimiert. Dabei ist es möglich die Lagen, von Aufbau (1) und tragender Einheit (3), unterschiedlich zu gestalten.
R. 33 (4)
* Im vorliegenden Beispiel wird der Anmelder im Erteilungsantrag (vgl. Beilage, Feld 39) angeben, dass Abbildung 1 zur Veröffentlichung mit der Zusammenfassung vorgeschlagen wird (vgl. 99).

## Beschreibung

### Bezeichnung der Erfindung (Angabe im Erteilungsantrag genügt)

[Technik zum reduzieren von Verdrehung]
[Technology to reduce of Distorsion]
[Technology en reduire de Torsion]

### R. 27 (1) a) Technisches Gebiet auf das sich die Erfindung bezieht

Die Erfindung betrifft ein veränderliches Ausgleichssystem, mit einem Aufbau bzw. einem Aufbau der im Volumen verändert werden kann, welches auf einer tragenden Einheit gelagert ist.
In der Länge veränderliche Lagerungselemente, sowie die Verbindungselemente des Ausgleichsystems, sind mit dem Aufbau und der tragenden Einheit verbunden.

### R. 27 (1) b) Einschlägiger Stand der Technik mit Fundstellen

Die genannten Aufbauten werden in Kastenbauweise gefertigt.
Eine aufwendige technische Lösung um eine nutzbare Fläche, zu vergrößern.
Ein in der Größe variabler Raum, eines Aufbaus, um mehr Nutzfläche zu erzeugen.

Anordnungen der genannten Art sind beispielsweise aus der DE-8 34 180 B,
der DE-101 04 529 A1, der US-59 08 215 A, der US-50 04 293 A oder auch
der EP-02 34 258 A1 bekannt und ermöglichen die Aufnahme eines Aufbaus, teilweise mit der Möglichkeit den nutzbaren Innenraum zu vergrößern.

Der kastenförmige Aufbau verfügt hier über einen seitlichen Einschub, der sich auf am Fahrgestell angebrachten Rollen abstützt. Der Antrieb der verschiebbaren Einheit erfolgt über Hydraulikzylinder. Im ausgefahrenen Zustand muss der Erker durch Standbeine gestützt werden. Nicht erwähnt werden die Art der Kopplung von Fahrgestell und Aufbau, sowie die Anbindung der Fahrerkabine an diesen Aufbau.

Auch sind die Lösungen zum Teil technisch sehr aufwändig. So wird in der Auslegeschrift Nr. DE 1 203 140 A des Deutschen Patentamts ein Mechanismus für das gleichzeitige und gleichförmige seitliche Ausfahren der Seitenteile eines für ein straßen- oder geländetaugliches Fahrzeug bestimmten Aufbaus erläutert.

Die beiden kastenförmigen Seitenteile werden durch einen mechanischen Kurbeltrieb lateral ausgefahren. Die Kraftübertragung und Linearbewegung erfolgt über Kegelräder, Gewindestangen und Muttern. Ebenso ist es möglich, eine Dachkonstruktion über denselben Antrieb nach oben zu bewegen, um so die Durchgangs- und Stehhöhe zu vergrößern. Es wird in der Auslegeschrift jedoch nicht auf die Problematik der Abdichtung der beweglichen Seitenteile eingegangen. Auch wird nicht erläutert, wie die Kopplung von Fahrgestell und Aufbau ausgeführt ist.

Bei der im Fahrzeugbau üblichen Kastenbauweise werden sowohl der Wohnraum als auch die Fahrerkabine fest mit dem Fahrgestell verbunden. Dadurch werden sämtliche Verwindungen des Fahrgestells, die z.B. durch unebene Fahrbahnen erzeugt werden, an den Aufbau weitergeleitet. Diese Verwindungen können zu einem Verkanten des Erkers im Aufbau führen. Dadurch können Undichtigkeiten zwischen dem festem Aufbau und den verschiebbaren Erkern entstehen.

Die bisherigen Lösungen zur Realisierung von Aufbauten, teilweise mit
Erkertechniken, weisen in Detailbereichen noch Schwächen auf,
die auch eine breitere Nutzung bzw. Vermarktung bremsen.

### R. 27 (1) c) Zu lösende technische Aufgabe

Aufgabe der vorliegenden Erfindung ist es, einen Aufbau der eingangs genannten Art so zu verbessern, dass die erwähnten Nachteile der bekannten Anordnungen vermieden werden und dass insbesondere auf einfache Weise die Verbindungsvorrichtung zwischen Aufbau und tragender Einheit bei gleichermaßen sicherer Funktion Platz sparend aufgebaut werden kann.

### R. 27 (1) c) Darstellung der Erfindung

Diese Aufgabe wird, gemäß der Erfindung, bei einem Aufbau der genannten Art dadurch gelöst, dass keine direkte feste Verbindung zwischen dem Aufbau und der tragenden Einheit besteht. Die Bewegungsrichtung, des Aufbaus gegenüber der tragenden Einheit, ist im Wesentlichen in senkrechter Bewegungsrichtung vorgesehen und wird durch die Anordnung von Übertragungs- und Lagerungselementen realisiert.
Bewegliche Verbindungselemente, zwischen Aufbau und tragender Einheit, sind angeordnet um Quer- und Längskräfte aufzunehmen.

Damit kann auf sehr einfache Weise die bisher bestehende Notwendigkeit, der direkten Verbindung zwischen Aufbau und tragender Einheit umgangen werden. Es besteht weitgehende Freiheit hinsichtlich der Anordnung der Übertragungs- und Lagerungselementen, sowie der beweglichen Verbindungselements. Die Nutzung des Aufbaus wird bei gleichen Funktionsmerkmalen wie bisher erzielt.

### R. 27 (1) c) Vorteilhafte Wirkung der Erfindung

1. Durch eine indirekte Verbindung zwischen Aufbau und tragender Einheit, können sich Aufbau und tragende Einheit frei voneinander senkrecht bewegen.
2. Zusätzlich werden längs zum Aufbau einwirkende
   Verdrehungskräfte, der tragenden Einheit, absorbiert.

Durch neigen des Aufbaubodens zum Kurvenmittelpunkt, während der Bewegung in einer Kurve, erhöht sich der wirkende Steigungswiderstand am Aufbaubodens. Dadurch erhöht sich die wirkende Normalkraft, der lagernden Gewichtskraft, am Aufbauboden und somit der Reibwert am Aufbauboden.

### R. 27 (1) d) und e) Beschreibung wenigstens eines Wegs zur Ausführung der Erfindung unter Bezugnahme auf die Zeichnung(en)

Die Erfindung wird im Folgenden noch anhand der Zeichnung auszugsweise und teilweise schematisch dargestellten Ausführungsbeispiels näher erläutert.

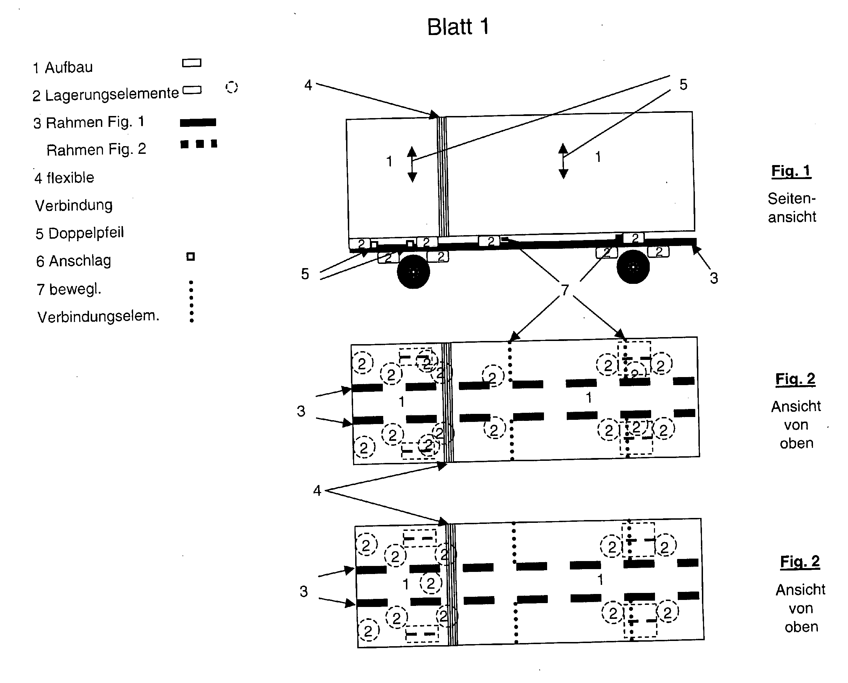

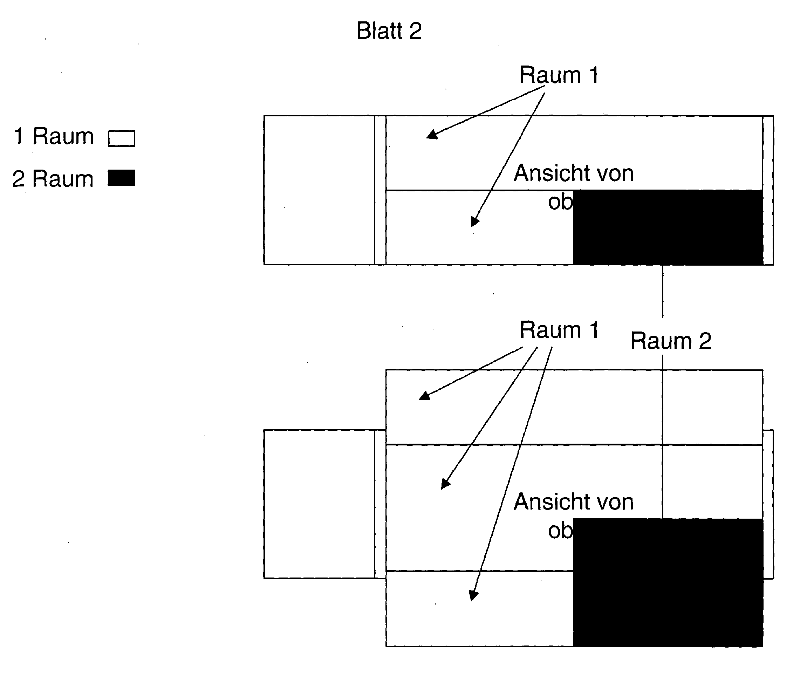

Die Fig. 1 zeigt dabei eine Darstellung durch ein erfindungsgemäßes Ausgleichssystems.

In Fig. 1 dargestellter Aufbau (1) und tragende Einheit (3), sind in Richtung des Doppelpfeils (5), richtungsunabhängig beweglich. Dieses wird durch den Einsatz von Federelementen(2) ermöglicht.
In Fig. 1 dargestellte untere Endstellung des Aufbaus (1), wird durch Anschläge (6) begrenzt. Die obere Endstellung, des Aufbaus (1), erfolgt durch die Gewichtskraft des Aufbaus (1), alternativ durch Anschläge (6).
Die Anordnung des Aufbaus (1), in Längs- und Querrichtung, wird in Fig. 2 dargestellt. - Um den Aufbau(1) in Längs- und Querrichtung zu fixieren, werden zwischen Aufbau (1) und tragender Einheit (3) bewegliche Verbindungselemente (7) angeordnet. Bewegliche Verbindungselemente (7) sind hier als Welle mit verbundenem Kugelkopf abgebildet und im Wesentlichen horizontal in Längs- und Querrichtung angeordnet, womit sich eine sehr kompakte Bauweise bei gleichzeitig sicherer Funktion ergibt.
Durch einseitige Ansteuerung der Lagerungselemente (2), oberhalb der tragenden Einheit (3), neigt sich demzufolge der Boden des Aufbaus (1).

## Patentansprüche

1. R. 29 (1) a) Erster Teil(Oberbegriff) des unabhängigen Patentanspruchs
Technik zum reduzieren von Verdrehung und/oder zum neigen, mit verstellenden Lagerungselementen, sowie mit beweglichen Verbindungselementen, welche zwischen einem Aufbau und einer tragendenden Einheit angeordnet sind,
R. 29 (1) b) Kennzeichnender Teil
**dadurch gekennzeichnet, dass** der Aufbau (1), bezüglich der Bewegungsrichtung der tragenden Einheit (3), beweglich angeordnet ist und zumindest ein verstellendes Lagerungselement (2),sowie ein bewegliches Verbindungselement (7) belastet wird.
R. 29 , (3), (4) Abhängiger Patentanspruch

2. Technik zum reduzieren von Verdrehung und/oder zum neigen, nach Anspruch 1 **dadurch gekennzeichnet, dass** am Aufbau (1), keine Verdrehungsbeanspruchung auftritt.

3. Technik zum reduzieren von Verdrehung und/oder zum neigen, nach Anspruch 1 und 2 **dadurch gekennzeichnet, dass** der Aufbau (1), bezüglich der Längs- und/ oder Querachse der tragenden Einheit (3), den Neigungswinkel ändert.

4. Technik zum reduzieren von Verdrehung und/oder zum neigen, nach Anspruch 1, 2 und 3 **dadurch gekennzeichnet, dass** der Aufbau (1), bezüglich der Längs- und/ oder Querachse der tragenden Einheit (3), den Abstand verändert.

5. Technik zum reduzieren von Verdrehung und/oder zum neigen, nach Anspruch 1, 2, 3 und 4 **dadurch gekennzeichnet, dass** der Aufbau (1), bezüglich der senkrechten Achse der tragenden Einheit (3), die Lage verändert.

6. Technik zum reduzieren von Verdrehung und/oder zum neigen, nach Anspruch 1, 2, 3, 4 und 5 **dadurch gekennzeichnet, dass** der Aufbau (1) und die tragende Einheit (3) sowohl lösbar, als auch unlösbar miteinander verbunden sind.

7. Technik zum reduzieren von Verdrehung und/oder zum neigen, nach Anspruch 1, 2, 3, 4, 5 und 6 **dadurch gekennzeichnet, dass** der Aufbau (1) in seinem Volumen veränderlich ist (Raum 1 und Raum 2). Art. 85
